# EUROPÄISCHE PATENTANMELDUNG

(11) **EP 1 213 053 A2**
(43) Veröffentlichungstag der Anmeldung: **12.06.2002**
(21) Anmeldenummer: 01127819.9
(22) Anmeldetag: 22.11.2001
(51) Int. Cl.: B01J 31/16, C08G 77/398, C08G 77/58, C08G 77/42, C07D 301/12, C07D 301/19, C07C 249/08

(54) **Katalysatorsystem auf Basis von Silasesquioxan-Metallkomplexe aufweisenden Polymerverbindungen**

(30) Priorität: 07.12.2000 DE 10060775
(71) Anmelder: Creavis Gesellschaft für Technologie und Innovation mbH, 45764 Marl (DE)
(72) Erfinder: Kühnle, Adolf, Dr., 45770 Marl (DE); Duda, Mark, Dr., 67071 Ludwigshafen (DE); Jost, Carsten, Dr., 45770 Marl (DE); Van Santen, Rutger Anthony, Professor Dr., 5631 LL Eindhoven (NL); Abbenhuis, Hendrikus Cornelis Louis, Dr., 5672 RB Nuenen (NL); Skowronska-Ptasinska, Maria Danuta, Dr., 5629 GM Eindhoven (NL)

(57) **Zusammenfassung**

Die Erfindung betrifft ein Katalysatorsystem auf Basis einer zumindest einen Silasesquioxan-Metallkomplex aufweisenden Polymerverbindung für die Oxidation und Oximierung von organischen Verbindungen durch Verwendung von Peroxiden, ein Verfahren zu dessen Herstellung sowie die Verwendung dieser Katalysatorsysteme.

Silasesquioxan-Verbindungen und Metallkomplexe dieser Verbindungen sind hinlänglich bekannt. Diese Verbindungen können als Katalysatoren eingesetzt werden. Werden diese Verbindungen als Katalysatoren eingesetzt, tritt häufig die Schwierigkeit auf, dass der Katalysator nicht wiederverwendet werden kann und außerdem schlecht vom Produkt der katalytischen Reaktion abgetrennt werden kann. Diese Probleme können durch die Verwendung der erfindungsgemäßen zumindest einen Silasesquioxan-Metallkomplexe aufweisenden Polymerverbindungen, die ein Molekulargewicht Mn größer 1 000 g/mol aufweisen, vermieden werden. Diese erfindungsgemäßen Katalysatorsysteme können sowohl als homogener als auch als heterogener Katalysator eingesetzt werden. Insbesondere können die erfindungsgemäßen Katalysatoren zur Katalyse von Oxidations- oder Oximierungsreaktionen eingesetzt werden.

## Beschreibung

Die Erfindung betrifft ein Katalysatorsystem auf Basis einer zumindest einen Silasesquioxan-Metallkomplex aufweisenden Polymerverbindung, ein Verfahren zu deren Herstellung sowie ein Verfahren für die Oxidation und Oximierung von organischen Verbindungen durch Verwendung von Peroxiden mit Katalysatoren unter Verwendung der Katalysatorsysteme.

Lichtenhan et al. beschreiben die Synthese von Silasesquioxan-Siloxan-Copolymeren durch Polykondensation von difunktionellen oligomeren Silasesquioxanen mit geeigneten difunktionellen Silan- bzw. Siloxan-Comonomeren (*Macromolecules* **1993**, *26*, 2141-2142; US 5 412 053). Daneben beschreiben Lichtenhan et al. in US 5 484 867 auch die Verwendung von oligomeren Silasesquioxanen mit einer reaktiven Eck-Gruppe zur Synthese von Polymeren. Ebenfalls bekannt ist die mögliche Funktionalisierung oligomerer Silasesquioxane via Olefinmetathese und Hydrosilylierung (US 5 942 638,US 5 939 576).

Neuerdings gewinnen metallhaltige Silasesquioxane hinsichtlich ihrer möglichen Verwendung als Katalysatoren an Bedeutung (Abbenhuis, *Chem. Eur. J.* **2000**, *6*, 25-32). Metallasilasesquioxane werden dabei beispielsweise als homogene Katalysatoren für die Olefinmetathese (Feher et al., *J. Am. Chem. Soc.* **1994**, *116,* 2145-2146) und die Olefinpolymerisation (Feher et al., *J*. *Chem. Soc., Chem. Commun*. **1990**, 1614-1616) eingesetzt.

Für katalytische Oxidationsreaktionen organischer Substrate mit Peroxiden eignen sich Redoxmolekularsiebe (modifizierte Zeolithe, Silikalite, Alumophosphate, Silikoalumophosphate) als Heterogenkatalysatoren. Insbesondere der Titansilikalit TS-1 kann für die Oxidation und Oximierung organischer Verbindungen mit Wasserstoffperoxid eingesetzt werden (*Angew. Chem.* **1997**, *109,* 1190-1211).

Der Titansilikalit TS-1 weist jedoch ein starres Gitter auf und ist nicht in der Lage, seine Topologie durch größere Konformationswechsel zu verändern. Da der TS-1 zudem eine relativ geringe Porenweite besitzt, ist seine Anwendung auf kleine Substratmoleküle begrenzt. Größere Moleküle können nicht in das Netzwerk diffundieren und gelangen somit nicht zu den katalytisch aktiven Ti-Zentren. So eignet sich der TS-1 beispielsweise zur Epoxidation linearer Alkene mit H₂O₂, doch bereits das Cycloolefin Cyclohexen ist zu groß, um in das Porensystem des TS-1 gelangen zu können (*J. Catal*. **1993**, *140,* 71-83; *J. Catal.* **1991**, *129*, 159-167).

Homogen lösliche Ti-Silasesquioxankomplexe können als niedermolekulare Modelle für Silikalitverbindungen wie den TS-1 angesehen werden. Dabei weisen sie die Einschränkungen und Nachteile des TS-1 nicht auf, da sie über frei zugängliche aktive Titan-Zentren verfügen. Eine Einschränkung des Substratspektrums auf den Bereich kleiner Moleküle ist somit nicht gegeben. Komplexe des Typs [TiL(R₇Si₇O₁₂)] weisen in Analogie zum TS-1 eine Aktivität hinsichtlich der Epoxidierung von Olefinen auf (Crocker et al., *J. Chem. Soc., Dalton Trans.* **1999**, 3791-3804; *Chem. Commun*. **1997**, 2411-2412; US 5 750 741). Allerdings werden dabei vornehmlich Alkylhydroperoxide als stöchiometrische Oxidationsmittel verwendet. Die ökonomisch und ökologisch günstigere Anwendung von homogenen und heterogenen Silasesquioxan-Metallkomplexen für Oxidationsreaktionen mit H₂O₂ ist bislang lediglich auf ein Einzelbeispiel begrenzt (van Santen, WO 98/46352), bei dem ein homogen lösliches Polyoxotitanat als Aktivator für H₂O₂ eingesetzt wurde.

Gegenüber dem Molekularsieb weisen die homogenen Katalysatoren zwar den Vorteil auf, dass das Substratspektrum nicht auf Moleküle einer durch die Kristallstruktur des Heterogenkatalysators vorgegebene Maximalgröße eingeschränkt ist. Anderseits weisen die homogenen Modelle aber keine für eine technische Anwendung ausreichende Stabilität auf. Zudem ist der Katalysator nicht recyclebar, da eine selektive Abtrennung der Silasesquioxane aus dem Reaktionsgemisch nicht bekannt ist. Eine kontinuierliche Reaktionsführung, wie sie bei großtechnischen Prozessen angestrebt wird, ist somit nicht möglich. Weiterhin belasten die hohen Kosten an Katalysator bzw. der Verlust an Katalysator die Wirtschaftlichkeit eines potentiellen Verfahrens.

Es gibt Lösungsansätze, die auf der Heterogenisierung der homogen löslichen Silasesquioxan-Komplexe durch Kombination mit einem geeigneten Trägermaterial basieren. Dadurch ließen sich die Vorteile der leichten Abtrennbarkeit des Heterogenkatalysators mit der hohen Aktivität des Homogenkatalysators und dessen Anwendbarkeit auf eine breite Substratpalette kombinieren. Im Gegensatz zum TS-1 wären die aktiven Ti-Zentren im Falle der heterogenisierten Ti-Silasesquioxane für die organischen Substratmoleküle frei zugänglich und ermöglichten auch die selektive Oxidation mittlerer und großer Substrate.

Ein solcher Lösungsansatz besteht z.B. darin, homogen lösliche Titan-Silasesquioxankomplexe, wie z. B. [(c-C₆H₁₁)₇Si₇O₁₂]-Ti(η⁵-C₅H₅), durch reine Adsorption an dem mesoporösen MCM41-Zeolithen zu heterogenisieren und dann als Epoxidations-Katalysator einzusetzen (van Santen, *Angew. Chem., Int. Ed. Engl.* **1998**, *37*, 356-358; DE 197 30 376). Die geringe Beladung des Trägers mit der aktiven Komponente erweist sich aber als äußerst nachteilig. Die Reaktionsgeschwindigkeit der geträgerten Katalysatoren für die Epoxidierung von Olefinen ist sehr gering im Vergleich zu den homogenen Vorstufen. Weiterhin weisen Katalysatoren dieser Art eine sehr hohe Tendenz zur Abgabe der aktiven Komponente im Laufe der Reaktion auf. So gibt es keine Beispiele für die wiederholte Verwendbarkeit des Katalysatorsystems.

Es sind auch durch Polykondensation herstellbare hochmolekulare Silasesquioxane bekannt. So wurde z. B. von Abbenhuis et al. ein Verfahren zur Herstellung eines Ti-haltigen Silasesquioxangels beschrieben, das auf der Kondensationsreaktion von (c-C₆H₁₁)₈Si₈O₁₁(OH)₂ mit TiCl₄ oder Ti(CH₂Ph)₄ basiert (*Chem. Commun.* **1997**, 331-332). Das Gel weist eine katalytische Aktivität hinsichtlich der Epoxidierung von Olefinen auf, wobei die Aktivität aber auf die Bildung niedermolekularer Ti-Komplexe zurückzuführen ist. Diese niedermolekularen Ti-Komplexe entstehen durch Auslaugungsprozesse aus dem heterogenen Katalysator, der keine ausreichende Stabilität aufweist. Es liegt somit ebenfalls eine einfache homogen katalysierte Reaktion vor.

Die Aufgabe der vorliegenden Erfindung bestand darin, ein stabiles, wiederverwendbares Katalysatorsystem auf der Basis von Silasesquioxan-Verbindungen zu entwickeln, das in einfacher Art und Weise von dem Reaktionssystem abzutrennen ist und für katalytische Oxidationsreaktionen organischer Verbindungen jeglicher Größe - also ohne den durch die Porengröße limitierten Einsatzbereich des TS-1 - mit peroxidischen Oxidationsmitteln, insbesondere H₂O₂ einsetzbar ist.

Überraschenderweise wurde gefunden, dass ein Katalysatorsystem auf Basis einer zumindest einen Silasesquioxan-Metallkomplex aufweisenden Polymerverbindung, wobei die Polymerverbindung ein Molekulargewicht Mn größer 1 000 g/mol aufweist, für die Oxidation oder die Oximierung organischer Verbindungen einsetzbar ist und in einfacher Art und Weise von dem Reaktionssystem abgetrennt werden kann.

Gegenstand der vorliegenden Erfindung ist deshalb ein Katalysatorsystem gemäß Anspruch 1, auf Basis einer zumindest einen Silasesquioxan-Metallkomplex aufweisenden Polymerverbindung, welches dadurch gekennzeichnet ist, dass die Polymerverbindung ein Molekulargewicht Mn größer 1 000 g/mol aufweist.

Ebenfalls Gegenstand der vorliegenden Erfindung ist ein Verfahren gemäß Anspruch 11 zur Herstellung von Katalysatorsystemen auf Basis von zumindest einen Silasesquioxan-Metallkomplex aufweisenden Polymerverbindungen, welches dadurch gekennzeichnet ist, dass die Polymerverbindung durch Homo- Co-, und/oder Pfropfpolymerisation (Grafting) einer Silasesquioxan-Verbindung, die zumindest einen ungesättigten Olefinrest aufweist, erhalten wird.

Außerdem ist Gegenstand der vorliegenden Erfindung ein Verfahren gemäß Anspruch 27 zur Oxidation oder Oximierung von organischen Verbindungen, welches dadurch gekennzeichnet ist, dass ein Katalysatorsystem gemäß zumindest einem der Ansprüche 1 bis 10 eingesetzt wird.

Die erfindungsgemäßen Katalysatorsysteme haben den Vorteil, dass die Katalysatorsysteme sowohl in homogener als auch in heterogener Form eingesetzt und trotzdem auf einfache Art und Weise aus dem Reaktionsgemisch abgetrennt werden können.

Das erfindungsgemäße Verfahren hat den Vorteil, dass auf der Basis von nicht vollständig kondensierten Silasesquioxanen bzw. von Silasesquioxan-Metallkomplexen, die auf einfache Art und Weise in großer Variation hergestellt werden können und die zumindest einen ungesättigten Olefinrest enthalten, hochmolekulare Polymerverbindungen durch Homo-, Co- und/oder Pfropfpolymerisation synthetisiert werden können, die als Katalysatorsystem entweder in heterogener Form oder homogener Form eingesetzt werden können.

Das erfindungsgemäße Katalysatorsystem, welches z.B. insbesondere für die Oxidation oder die Oximierung organischer Verbindungen eingesetzt werden kann, basiert auf einer zumindest einen Silasesquioxan-Metallkomplex aufweisenden Polymerverbindung. Diese weisen erfindungsgemäß ein vorzugsweise osmometrisch bestimmtes Molekulargewicht Mn von größer 1 000 g/mol, vorzugsweise von 5 000 bis 500 000 g/mol und ganz besonders bevorzugt von 10 000 bis 100 000 g/mol auf.

Das Molekulargewicht Mn ist nach den einschlägigen DIN-ISO-Normen definiert als das Zahlenmittel der Molmasse in g/mol. Sie ist der Quotient aus Einwaage m in g durch Stoffmenge n in mol. Die Stoffmenge kann z.B. durch Osmose gemessen werden. Mn kann aber auch aus Abschnitten der Verteilungskurve der Gelpermeationschromatographie ermittelt werden.

Die Silasesquioxan-Metallkomplexe der erfindungsgemäßen polymeren Katalysatorsysteme weisen zumindest ein Metall der Nebengruppen des Periodensystems, der Lanthanoide, der Actinoide, der 3. Hauptgruppe und/oder der 4. Hauptgruppe auf. Vorzugsweise weisen die Silasesquioxan-Metallkomplexe der erfindungsgemäßen Katalysatorsysteme zumindest ein Metall der 4. Nebengruppe des Periodensystems, ganz besonders bevorzugt zumindest Titan auf.

Der Gehalt an Metall im Katalysatorsystem ist vorzugsweise so groß, dass die zumindest einen Silasesquioxan-Metallkomplex aufweisende Polymerverbindung von 1 x 10⁻⁸ Gew.-% bis 25 Gew.-%, besonders bevorzugt von 1 x 10⁻⁶ Gew.-% bis 10 Gew.-% zumindest eines Metalls aufweist.

Die Polymerverbindung weist zumindest einen Silasesquioxan-Metallkomplex der Formel **I**

R¹ ₐR² _{b}R³ ⱼSi_{c}O_{d}HₑX_{f}M_{g}Yₕ I

mit
- R¹=: aliphatischer, aromatischer, cyclischer oder acyclischer Kohlenwasserstoffrest, mit oder ohne funktionelle Gruppen,
- R² =: zumindest eine Doppelbindung aufweisender aliphatischer, aromatischer, cyclischer oder acyclischer Kohlenwasserstoffrest,
- R³ =: aliphatischer, aromatischer, cyclischer oder acyclischer Kohlenwasserstoffrest, über welchen der Silasesquioxan-Metallkomplex mit einem Rest der Polymerverbindung verbunden ist,
- X=: H, OH, Halogen, Alkoxyrest und/oder Organosilylrest
- M=: Element der Nebengruppen des Periodensystems, Lanthanoid, Actinoid, Element der 3. Hauptgruppe und/oder Element der 4. Hauptgruppe
- Y =: anionischer Rest,
- a =: 0 bis 23,
- b=: 0 bis 23,
- c =: 5 bis 24,
- d =: 12 bis 48,
- e=: 0 bis 10,
- f =: 0 bis 8,
- g =: 1 bis 4,
- h=: 0 bis 12,
- j =: 1 bis 24
mit der Maßgabe, dass a + b + j = c,
auf.

Anionische Reste Y im Sinne der vorliegenden Erfindung können sowohl anorganische Reste, wie z.B. Halogenidionen, Hydroxidionen oder Nitrationen als auch organische Reste, wie z.B. Cyclopropyl-, Cyclobutyl-, Cyclopentyl-, Cyclohexyl oder tert.-Butyl-Reste, wie z.B. F, Cl⁻, Br⁻, I⁻, NO₃⁻, SO₄²⁻, OAc⁻, OH⁻, sein.

Unter aliphatischen, aromatischen, cyclsichen oder acyclsichen Kohlenwasserstoffresten werden im Sinne der vorliegenden Erfindung substituierte oder unsubstituierte, von 1 bis 40, vorzugsweise von 1 bis 20 Kohlenstoffatome aufweisende Kohlenwasserstoffreste verstanden, wobei die

Kohlenstoffatome teilweise durch Heteroatome, wie z.B. Stickstoff, Sauerstoff, Schwefel, Phosphor oder Silizium ersetzt sein können. Die Kohlenwasserstoffreste können als verzweigte oder unverzweigte Ketten aber auch als cyclische Reste vorliegen. Beispielhaft sind im folgenden einige Kohlenwasserstoffreste, die als R¹ oder R³ eingesetzt werden können, genannt, ohne dass der Erfindungsgegenstand auf diese beschränkt sein soll. Zu der Gruppe der genannten Kohlenwasserstoffreste gehören z.B. Methyl-, Ethyl-, Propyl-, n-Butyl, i-Butyl, Pentyl-, Hexyl-, Heptyl-, Octyl-, Nonyl-, Dodecanyl-, Benzyl-, Phenyl-, Cyclopropyl-, Cyclobutyl-, Cyclohexyl-, Cyclopentyl-, Cycloheptyl-, Cyclododecanyl- oder Siliziumorganyl-Reste. Die genannten Kohlenwasserstoffreste können auch als Rest R² eingesetzt werden, wenn die Bedingung erfüllt ist, dass die Kohlenwasserstoffreste zumindest eine Mehrfachbindung, wie z.B. eine Doppel- oder Dreifachbindung, aufweisen, wie z.B. ein Propenyl, Vinyl-, Cyclododecatrienyl-, Butenyl-, Butinyl-, oder Cyclopentenyl-Reste. Die Kohlenwasserstoffreste sind üblicherweise mit dem Siliziumatom im Silasesquioxan über eine Si-C-Bindung verbunden.

Vorzugsweise weist die Polymerverbindung des erfindungsgemäßen Katalysatorsystems von 0,1 Gew.-% bis 99 Gew.-%, vorzugsweise von 1 bis 90 Gew.-% und ganz besonders bevorzugt von 0,3 bis 35 Gew.-% zumindest einer Verbindung der Formel **I** auf.

Die Polymerverbindungen des erfindungsgemäßen Katalysatorsystems weisen vorzugsweise Ketten oder Netzwerke aus Dialkylsiloxan- und/oder -silancopolymereinheiten und/oder Alkylhydrosiloxan- und/oder -silancopolymerverbindungen auf, mit welchen die Silasesquioxan-Metallkomplexe über Kohlenwasserstoffreste verbunden sind. Vorzugsweise weisen die Polymerverbindungen Ketten oder Netzwerke aus Dimethylsiloxan- und/oder Methylhydrosiloxan-Copolymerverbindungen auf.

Das erfindungsgemäße Katalysatorsystem wird vorzugsweise durch das erfindungsgemäße Verfahren zur Herstellung von Katalysatorsystemen auf Basis einer zumindest einen Silasesquioxan-Metallkomplex aufweisenden Polymerverbindung, welches dadurch gekennzeichnet ist, dass die Polymerverbindung durch Homo- Co-, und/oder Pfropfpolymerisation (Grafting) einer Silasesquioxan-Verbindung, die zumindest einen ungesättigten Olefinrest aufweist, erhalten.

Vorzugsweise wird als Silasesquioxan-Verbindung zumindest eine Verbindung der Formel **II**

R¹ ₐR² _{b}Si_{c}O_{d}HₑX_{f}M_{g}Yₕ II

mit
- R¹ =: aliphatischer, aromatischer, cyclischer oder acyclischer Kohlenwasserstoffrest, mit oder ohne funktionelle Gruppen,
- R² =: zumindest eine Doppelbindung aufweisender aliphatischer, aromatischer, cyclischer oder acyclischer Kohlenwasserstoffrest,
- X =: H, OH, Halogen, Alkoxyrest und/oder Organosilylrest
- M=: Element der Nebengruppen des Periodensystems, Lanthanoid, Actinoid, Element der 3. Hauptgruppe und/oder Element der 4. Hauptgruppe
- Y =: anionischer Rest,
- a=: 0 bis 23,
- b=: 1 bis 24,
- c =: 5 bis 24,
- d=: 12 bis 48,
- e=: 0 bis 10,
- f=: 0 bis 8.
- g =: 0 bis 4,
- h=: 0 bis 12,
und mit der Maßgabe, dass a + b = c,
eingesetzt.

Ebenso vorteilhaft kann es sein, als Silasesquioxan-Verbindung zumindest eine Verbindung der Formel **III**

R¹ ₐR² _{b}Si₇O₁₂M_{g}Yₕ III

mit
- R¹ =: aliphatischer, aromatischer, cyclischer oder acyclischer Kohlenwasserstoffrest, mit oder ohne funktionelle Gruppen,
- R² =: zumindest eine Doppelbindung aufweisender aliphatischer, aromatischer, cyclischer oder acyclischer Kohlenwasserstoffrest,
- M=: Element der Nebengruppe des Periodensystems, Lanthanoid, Actinoid, Element der 3. Hauptgruppe und/oder Element der 4. Hauptgruppe
- Y =: anionischer Rest,
- a=: 0 bis 6,
- b=: 1 bis 7,
- g =: 1,
- h=: 1 bis 3,
und mit der Maßgabe, dass a + b = 7,
einzusetzen.

Auch kann es vorteilhaft sein, als Silasesquioxan-Verbindung zumindest eine Verbindung der Formel **IV**

R¹ ₐR² _{b}Si₇O₁₂H₃ IV

mit
- R¹ =: aliphatischer, aromatischer, cyclischer oder acyclischer Kohlenwasserstoffrest, mit oder ohne funktionelle Gruppen,
- R² =: zumindest eine Doppelbindung aufweisender aliphatischer, aromatischer, cyclischer oder acyclischer Kohlenwasserstoffrest,
- a =: 0 bis 6,
- b=: 1 bis 7,
und mit der Maßgabe, dass a + b = 7,
einzusetzen.

Ebenso vorteilhaft kann es sein, als Silasesquioxan-Verbindung zumindest eine Verbindung der Formel **V**

R¹ ₐR² _{b}Si₁₈O₃₇H₄Ti₄ V

mit
- R¹ =: aliphatischer, aromatischer, cyclischer oder acyclischer Kohlenwasserstoffrest, mit oder ohne funktionelle Gruppen,
- R² =: zumindest eine Doppelbindung aufweisender aliphatischer, aromatischer, cyclischer oder acyclischer Kohlenwasserstoffrest,
- a=: 0 bis 17,
- b=: 1 bis 18,
und mit der Maßgabe, dass a + b = 24,
einzusetzen.

Auch kann als Silasesquioxan-Verbindung zumindest eine Verbindung der Formel **VI**

R¹ ₐR² _{b}Si₇O₁₂TiY VI

mit
- R¹ =: aliphatischer, aromatischer, cyclischer oder acyclischer Kohlenwasserstoffrest, mit oder ohne funktionelle Gruppen,
- R² =: zumindest eine Doppelbindung aufweisender aliphatischer, aromatischer, cyclischer oder acyclischer Kohlenwasserstoffrest,
- Y =: anionischer Rest,
- a=: 0 bis 6,
- b=: 1 bis 7,
und mit der Maßgabe, dass a + b = 7,
eingesetzt werden.

Ganz besonders bevorzugt werden als Silasesquioxan-Verbindungen Verbindungen der Formel **IV** oder **VI** eingesetzt.

Verbindungen der Formel **IV**, deren Struktur **VII** unten abgebildet ist, können durch Polykondensation trifunktioneller RSiZ₃-Precursor, wobei R für einen Kohlenwasserstoffrest steht und Z eine hydrolisierbare Gruppe wie z. B. Chlor, Alkoxy oder Siloxy darstellt, erfolgen (*J. Am. Chem. Soc*. **1989**, *111*, 1741-1748; *Organometallics* **1991**, *10,* 2526-2528; *Chem. Commun.* **1999**, 2153-2154). Vorteilhaft ist aber die Synthese über ein oligomeres Silasesquioxan der allgemeinen Formel R₆Si₆O₉, da hier eine breite Variation der Kohlenwasserstoffreste möglich ist und somit die Eigenschaften des Katalysators auf die jeweilige Reaktion besser abzustimmen ist.

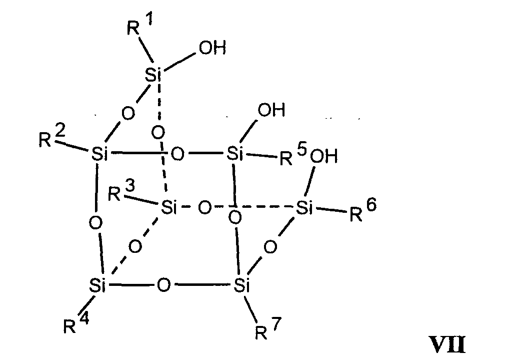

Damit die Verbindung mit der Struktur **VII** in dem erfindungsgemäßen Verfahren verwendet werden kann, ist es allerdings unabdingbar, dass zumindest ein Rest R eine ungesättigte olefinische Bindung aufweist.

Verbindungen der Formel **V**, deren Struktur **VIII** unten abgebildet ist, sind durch Reaktion von Titanverbindungen mit nicht vollständig kondensierten Silasesquioxan-Verbindungen des Typs R₆Si₆O₇(OH)₄ erhältlich. Die Herstellung von Verbindungen des Typs **VIII** ist in WO 98/46352 beschrieben. Für die Verwendung von Verbindungen mit der Struktur **VIII** als Silasesquioxan-Verbindung in dem erfindungsgemäßen Verfahren ist es wiederum notwendig, dass die Verbindung zumindest einen Rest R aufweist, der eine ungesättigte olefinische Bindung aufweist. Unter Einhaltung dieser Bedingung können die Reste R identisch oder unterschiedlich sein.

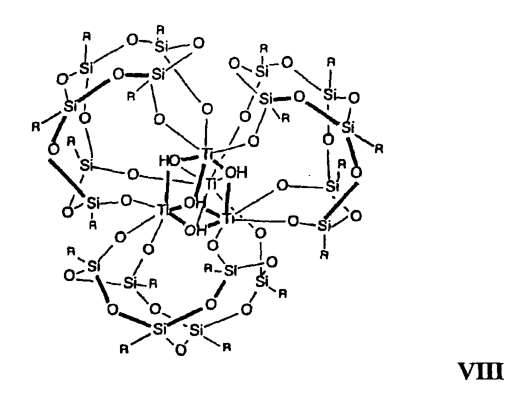

Es kann auch vorteilhaft sein, in einem ersten Schritt höhermolekulare Verbindungen durch Kondensation der Silasesquioxan-Verbindungen aufzubauen, um diese dann für die Homo-, Cooder Pfropf- Polymerisation zu verwenden.

Das erfindungsgemäße Verfahren zeichnet sich dadurch aus, dass eine Co- und/oder Pfropfpolymerisation zumindest einer Silasesquioxan-Verbindung, vorzugsweise einer der genannten Silasesquioxan-Verbindungen der Formel **II** bis **VI**, mit zumindest einer Verbindung, die zumindest eine olefinisch ungesättigte Bindung und/oder zumindest eine H-Heteroatom-Gruppe aufweist, durchgeführt wird. Die zumindest eine Verbindung, die eine olefinisch ungesättigte Bindung und/oder zumindest eine H-Heteroatom-Gruppe aufweist, kann z.B. ein Siloxan oder eine Silasesquioxan-Verbindung sein.

In einer besonderen Ausführungsform des erfindungsgemäßen Verfahrens erfolgt die Herstellung durch Homo-Polymerisation einer Silasesquioxan-Verbindung bzw. deren Metallkomplexes. Beispiele für die Polymerisationsreaktion sind neben anderen insbesondere die radikalische Polymerisation, die ionische Polymerisation und die ringöffnende Metathese (ROMP).

In einer weiteren besonderen Ausführungsform des erfindungsgemäßen Verfahrens erfolgt die Herstellung des erfindungsgemäßen Katalysatorsystems durch Co-Polymerisation einer Silasesquioxan-Verbindung bzw. deren Metallkomplex mit einem weiteren Silasesquioxan bzw. dem entsprechenden Metallkomplex oder einer zur Polymerisation befähigten organischen oder anorganischen Verbindung. Beispiele für solche Polymerisationsreaktionen sind neben anderen insbesondere die radikalische Polymerisation, die ionische Polymerisation und die ringöffnende Metathese (ROMP). Als Co-Monomere können neben vielen anderen insbesondere Silasesquioxane bzw. deren Metallkomplexe mit mindestens einem ungesättigten Olefinrest, aber auch Ethylen, Propylen, Styrol, Vinylchlorid, Allylalkohol, Acrylsäure, Methacrylsäure, Maleinsäureanhydrid eingesetzt werden.

In einer weiteren besonderen Ausführungsform des erfindungsgemäßen Verfahrens erfolgt die Herstellung des erfindungsgemäßen Katalysatorsystems durch Pfropfpolymerisation einer Silasesquioxan-Verbindung, die zumindest eine ungesättigte Bindung aufweist, mit einer Verbindung, die zumindest eine olefinisch ungesättigte Bindung oder zumindest eine Si-H-Gruppe enthält. Beispiele für die zu pfropfenden Verbindungen sind neben vielen anderen insbesondere polymere Silasesquioxane, Silikone, Siloxane, wie z.B. Polysiloxane, und Dendrimere.

In einer weiteren besonders bevorzugten Ausführungsform des erfindungsgemäßen Verfahrens erfolgt die Herstellung des erfindungsgemäßen Katalysatorsystems durch Umsetzung einer Silasesquioxan-Verbindung, die mindestens eine olefinisch ungesättigte Bindung enthält, mit zumindest einem Siloxan, das Si-H-Gruppen enthält, in der Art und Weise, dass nach der Umsetzung noch Si-H-Gruppen vorliegen, die für eine weitere Vernetzung verwendet werden können. Für diese Vernetzung eignen sich beispielsweise Silikone, Siloxane bzw. Silazane, oder Polymere dieser Verbindungen, die olefinisch ungesättigte Bindungen, enthalten. Besonders bevorzugt erfolgt zunächst eine Umsetzung einer Silasesquioxan-Verbindung oder eines Silasesquioxan-Metallkomplexes mit zumindest einem Methylhydrosiloxan-Dimethylsiloxan Copolymeren der Formel **IX**

(CH₃)₃Si-O-[SiHCH₃-O]ₘ-[Si(CH₃)₂-O]ₙ-Si(CH₃)₃ IX

wobei das Verhältnis von Methylhydrosiloxaneinheiten zu Dimethylsiloxaneinheiten im verwendeten Copolymeren von 5 : 1 bis 1 : 10, vorzugsweise von 1 : 1 bis 1 : 5 betragen kann. Aufgrund der variierenden Struktur der Copolymeren gemäß Formel **IX** müssen m und n nicht unbedingt ganze Zahlen sein. Der Index m kann Werte von 3 bis 20, vorzugsweise von 3,8 bis 13,5 annehmen. Der Index n kann Werte von 4 bis 30, vorzugsweise von 13,5 bis 21,4 annehmen. Die eingesetzten Copolymeren gemäß Formel **IX** weisen vorzugsweise ein Molekulargewicht Mw von 300 g/mol bis 5 000 g/mol, ganz besonders bevorzugt von 900 g/mol bis 2 000 g/mol auf. Aus der Größe des Indizes m läßt sich die maximale Anzahl an zur Kopplung mit einer Silasesquioxan-Verbindung oder einem Silasesquioxan-Metallkomplex, die zumindest eine ungesättigte olefinische Verbindung aufweisen, vorhandenen Si-H-Bindungen berechnen. Diese Si-H-Bindungen können ganz oder teilweise mit Silasesquioxan-Verbindungen oder -Metallkomplexen abgesättigt werden. Vorzugsweise werden 1 bis 100 %, besonders bevorzugt 5 bis 50 % und ganz besonders bevorzugt 10 bis 20 % der Si-H-Bindungen zur Reaktion mit Silasesquioxan-Verbindungen oder -Metallkomplexen verwendet.

Die Umsetzung erfolgt vorzugsweise durch Vermischen der Komponenten, also der Silasesquioxan-Verbindungen oder -Metallkomplexe mit zumindest einer Verbindung der Formel **IX**, wobei vorzugsweise ein Katalysator, besonders bevorzugt ein Platinkatalysator und ganz besonders bevorzugt ein Platindivinyltetramethyldisiloxan-Komplex als Katalysator eingesetzt wird.

Die so erhaltenen Polymerverbindungen können, wenn noch reaktive Gruppen, wie z.B. nicht abgesättigte Si-H-Bindungen vorhanden sind, mit weiteren Verbindungen, die eine ungesättigte olefinische Doppelbindung aufweisen, umgesetzt werden. Durch solche Vernetzungsreaktion kann das Molekulargewicht und die Größe der Polymerverbindung in dem erfindungsgemäßen Katalysatorsystem beeinflußt werden. Vorzugsweise wird als Vernetzungsmittel zumindest eine Verbindung der Formel **X** eingesetzt,

(CH₂=CH)-Si(CH₃)₂-O-[Si(CH₃)₂-O]ₚ-Si(CH₃)₂-(CH=CH₂) X

wobei der Index p Werte von 1 bis 200, vorzugsweise von 5 bis 150 einnehmen kann. Die Herstellung des Reaktionsgemisches erfolgt vorzugsweise so, dass das Verhältnis von Si-H-Bindungen zu Si-Vinyl-Bindungen in der Reaktionsmischung von 3 : 1 bis 1 : 1, vorzugsweise von 2 : 1 bis 1 : 1 und ganz besonders bevorzugt 1,5 : 1 beträgt.

Besonders bevorzugt werden als Silan- oder Siloxanverbindungen Ketten oder Netzwerke aus Dialkylsiloxan- und/oder -silancopolymereinheiten und/oder Alkylhydrosiloxan- und/oder - silancopolymerverbindungen eingesetzt. Ganz besonders bevorzugt werden Dimethylsiloxanund/oder Methylhydrosiloxan-Copolymerverbindungen gemäß der Formeln **IX** und/oder **X** zur Herstellung des Katalysatorsystems auf Basis von hochmolekularen Silasesquioxan-Metallkomplexen aufweisenden Polymerverbindungen eingesetzt.

In einer weiteren bevorzugten Ausführungsform des erfindungsgemäßen Verfahrens erfolgt die Herstellung der erfindungsgemäßen Katalysatoren durch Umsetzung einer Silasesquioxan-Verbindung, die mindestens eine olefinisch ungesättigte Bindung enthält, mit einem Dendrimer, wie z.B. Si[CH₂CH₂Si(CH₃)₂CH₂CH₂[SiCH₃(H)₂]]₄. Beispiele für weitere geeignete Dendrimere stellen die Verbindungen von Seyferth et al. dar (*Organometallics* **1994**, *13*, 2682-2690).

Die Polymerverbindung, auf welcher das erfindungsgemäße Katalysatorsystem basiert, kann, je nach eingesetztem Vernetzungsmittel, einen Gehalt an Silasesquioxan-Verbindungen bzw. - Metallkomplexen von 0,1 bis 99 Gew.-%, vorzugsweise von 1 bis 90 Gew.-% und ganz besonders bevorzugt von 3 bis 35 Gew.-% aufweisen.

Die Herstellung des Katalysatorsystems kann in Masse, dass heißt ohne die Verwendung von Lösungsmittel durchgeführt werden. Die Herstellung kann aber auch in flüssiger Phase, vorzugsweise unter Verwendung eines aprotischen Lösungsmittels erfolgen. Als aprotische Lösungsmittel kann z.B. Toluol oder Hexan eingesetzt werden.

Die Polymerisation erfolgt vorzugsweise bei 0 °C bis 100 °C.

Die Polymerisationsreaktionen werden vorzugsweise so lange aufrecht erhalten, wie zur Bildung von Molekülen mit einer Molekülmasse Mn größer 1 000 g/mol notwendig ist. Vorzugsweise wird die Länge der Polymerisationsreaktion durch die Menge der eingesetzten Verbindungen gesteuert. Es kann aber auch vorteilhaft sein, die Polymerisationsreaktion zu unterbrechen. Die Polymerisationsreaktionen können je nach Art der Polymerisationsreaktion durch Hinzufügen von Verbindungen, die ein Abbruch der Reaktion bewirken, unterbrochen werden. Im Falle der radikalisch durchgeführten Polymerisation kann die Polymerisationsreaktion durch Zugabe eines Radikalfängers zur Reaktionslösung abgebrochen werden.

Bei der ausschließlichen Verwendung nicht-metallhaltiger Silasesquioxan-Verbindungen, wie z.B. Verbindungen der Formel **IV**, für die Herstellung der erfindungsgemäßen Katalysatorsysteme schließt sich an die Polymerisation eine Modifizierung der aus der Homo-, Co- oder Pfropf-Polymerisation resultierenden Polymerverbindung mit einem Metall an. Diese Modifizierung erfolgt vorzugsweise durch Zugabe eines Metallsalzes. Es sind sehr viele Komponenten denkbar, insbesondere solche, die mit einem dreizähnigen Silanol reagieren können. Solche Verbindungen sind z.B. Ti(OtBu)₄, Zr(OtBu)₄ oder VO(acac)₂.

Ganz besonders bevorzugt erfolgt die Modifizierung durch Umsetzung der Polymerverbindung, die ein Molekulargewicht Mn von über 1 000 g/mol und zumindest eine Silasesquioxan-Verbindung aufweist, durch Besprühen der Polymerverbindung mit einer Metallsalzlösung, durch Tränkung der Polymerverbindung in einer Metallsalzlösung oder Lösen der Polymerverbindung in einer Metallsalzlösung.

Die erfindungsgemäßen Katalysatorsysteme eignen sich für eine Vielzahl von Reaktionen. Sie können beispielsweise zur Katalyse von Isomerisierungsreaktionen, Hydrierreaktionen, Oxidationsreaktionen mit Sauerstoff, Wasserstoffperoxid, organischen Peroxiden oder N₂O, Alkylierungsreaktionen, Metathesereaktionen, Disproportionierungsreaktionen, Dehydrierreaktionen, Alkoholbildung aus Olefinen, Kupplungsreaktionen, Substitutionsreaktionen, Cycloadditionsreaktionen, Cycloreversionsreaktionen oder Etherbildung, wobei diese Beispiele nur der Erläuterung dienen, ohne den Schutzumfang der Erfindung einzuschränken. Die erfindungsgemäßen Katalysatorsysteme können insbesondere zum Einsatz in Verfahren zur Oxidation oder Oximierung von organischen Verbindungen verwendet werden.

Das Katalysatorsystem kann bei diesen Verfahren als heterogener oder homogener Katalysator eingesetzt werden. Wird der Katalysator als heterogener Katalysator eingesetzt, so kann dieser z.B. durch einfache Filtrationsmethoden aus dem bei der Oxidation vorhandenen Reaktionsgemisch entfernt werden.

Wird der Katalysator als homogener Katalysator eingesetzt, so kann dieser z.B. mittels zumindest einer Membran aus der bei der Oxidation vorhandenen Reaktionslösung entfernt werden. Es ist beispielsweise aber auch möglich, den homogenen Katalysator im Anschluß an die Reaktion, z. B. durch die Zugabe eines Lösungsmittels, in dem der Katalysator nicht löslich ist, auszufällen.

In den Verfahren zur Oxidation und/oder Oximierung organischer Verbindungen, bei denen das erfindungsgemäße Katalysatorsystem eingesetzt wird, kann als Oxidationsmittel sowohl Wasserstoffperoxid als auch ein organisches Peroxid eingesetzt werden. Als organische Peroxide können z.B. tert.-Butylhydroperoxid, Ethylbenzolhydroperoxid und/oder Cumolhydroperoxid eingesetzt werden.

Mittels des erfindungsgemäßen Verfahrens kann als zu oxidierende oder oximierende Verbindung zumindest eine cyclische oder acyclische, einfach oder mehrfach ungesättigte Verbindung, ausgewählt aus Alkanen, Alkenen, Alkinen, Arenen, Heteroarenen, Alkoholen, Aldehyden, Ketonen, Sulfiden, Sulfoxiden, Aminen, Iminen, Hydroxylaminen, Säuren, Amiden, Estern, Anhydriden oder Säurehalogeniden, eingesetzt werden.

Die durch das erfindungsgemäße Verfahren darstellbaren Katalysatorsysteme für Oxidationsund/oder Oximierungsreaktionen sind recyclebar und lassen sich für weitere Reaktionszyklen einsetzen. Dies kann selbstverständlich auch nach einer Regenerierung des Katalysators z.B. durch Waschen erfolgen.

Das erfindungsgemäße Verfahren zur Herstellung des erfindungsgemäßen Katalysatorsystems sowie die erfindungsgemäße Verwendung des Katalysatorsystems wird in den folgenden Beispielen beschrieben, ohne dass die Erfindung auf diese Beispiele beschränkt sein soll.

### Beispiel 1 : Darstellung hochmolekularer Silasesquioxan-Katalysatoren

10 g eines Methylhydrosiloxandimethylsiloxan-Copolymers HMS-151 (von ABCR), einer Verbindung gemäß Formel **IX**, wobei der Index m den Wert 3,8 und der Index n den Wert 21,4 einnimmt, werden mit 4.4 g (C₆H₁₁)₆(CH₂CH)Si₇O₉(OH)₃, gelöst in ein wenig Toluol, versetzt.

Anschließend erfolgt die Zugabe weniger Tropfen einer Platindivinyltetramethyldisiloxan-Komplexlösung (200 ppm Platindivinyltetramethyldisiloxan in Xylol). Das Reaktionsgemisch wird für 10 Minuten bei Raumtemperatur gerührt. Es folgt die Zugabe von 85 g DMS-V21 (ein Polydimethylsiloxan mit endständigen Vinylgruppen gemäß Formel **X**, wobei der Index p den Wert 78 einnimmt, ebenfalls von ABCR). Nach 5 h bei 50 °C wird eine Polymerverbindung erhalten. Das Molekulargewicht Mn der Polymerverbindung beträgt 19 000.

### Beispiel 1a :

Zu der Substanz aus dem Beispiel 1 in 1 l Toluol wird 1.7 g Ti(OBu^{t})₄ gegeben und das Reaktionsgemisch für 30 Minuten gerührt. Der Feststoff wird anschließend abfiltriert und mit Acetonitril gewaschen. Der resultierende Feststoff enthält einen Ti-Gehalt von 0.2 Gew-%.

### Beispiel 1b :

Zu der Substanz aus dem Beispiel 1 in 100 ml Toluol wird 1.9 g Zr(OBu^{t})₄ gegeben und das Reaktionsgemisch für 30 Minuten gerührt. Der Feststoff wird anschließend abfiltriert und mit Acetonitril gewaschen. Der resultierende Feststoff enthält einen Zr-Gehalt von 0.4 Gew-%.

### Beispiel 1c :

Zu der Substanz aus dem Beispiel 1 in 100 ml Toluol wird 1.8 g Vanadylacetylacetonat gegeben und das Reaktionsgemisch für 30 Minuten gerührt. Der Feststoff wird anschließend abfiltriert und mit Acetonitril gewaschen. Der resultierende Feststoff enthält einen V-Gehalt von 0.2 Gew- %.

### Beispiel 2 :

10 g des Methylhydrosiloxandimethylsiloxan-Copolymers HMS-301 (von ABCR), einer Verbindung gemäß Formel **IX**, wobei der Index m den Wert 6,4 und der Index n den Wert 19,3 einnimmt, werden mit 29 g (C₆H₁₁)₆(CH₂CH)Si₇O₉(OH)₃, gelöst in Toluol, versetzt. Anschließend erfolgt die Zugabe von wenigen Tropfen einer Platindivinyltetramethyldisiloxan-Komplexlösung (200 ppm Platindivinyltetramethyldisiloxan in Xylol). Das Reaktionsgemisch wird für 10 Minuten bei Raumtemperatur gerührt. Nach 5 h bei 50 °C wird eine Polymerverbindung erhalten. Das Molekulargewicht Mn der Polymerverbindung beträgt 7500.

### Beispiel 2a :

Zu der Substanz aus dem Beispiel 2 in 100 ml Toluol wird 11.9 g Ti(OBu^{t})₄ gegeben und das Reaktionsgemisch für 30 Minuten gerührt. Der Feststoff wird anschließend abfiltriert und mit Acetonitril gewaschen. Der resultierende Feststoff enthält einen Ti-Gehalt von 3.2 Gew-%.

### Beispiel 2b :

Zu der Substanz aus dem Beispiel 2 in 100 ml Toluol wird 13.4 g Zr(OBu^{t})₄ gegeben und das Reaktionsgemisch für 30 Minuten gerührt. Der Feststoff wird anschließend abfiltriert und mit Acetonitril gewaschen. Der resultierende Feststoff enthält einen Zr-Gehalt von 6.0 Gew-%.

### Beispiel 2c :

Zu der Substanz aus dem Beispiel 2 in 100 ml Toluol wird 12.2 g Vanadylacetylacetonat (VO(acac)₂) gegeben und das Reaktionsgemisch für 30 Minuten gerührt. Der Feststoff wird anschließend abfiltriert und mit Acetonitril gewaschen. Der resultierende Feststoff enthält einen V-Gehalt von 3.3 Gew-%.

### Beispiel 3 :

10 g eines Methylhydrosiloxandimethylsiloxan-Copolymers HMS-151 (von ABCR), einer Verbindung gemäß Formel **IX**, wobei der Index m den Wert 3,8 und der Index n den Wert 21,4 einnimmt, werden mit 4.9 g (C₆H₁₁)₆(CH₂CH)Si₇O₉Ti(C₅H₅), gelöst in ein wenig Toluol, versetzt. Anschließend erfolgt die Zugabe von wenigen Tropfen einer Platindivinyltetramethyldisiloxan-Komplexlösung (200 ppm Platindivinyltetramethyldisiloxan in Xylol). Das Reaktionsgemisch wird für 10 Minuten bei Raumtemperatur gerührt. Es folgt die Zugabe von 85 g DMS-V21 (ein Polydimethylsiloxan mit endständigen Vinylgruppen gemäß Formel **X**, wobei der Index p den Wert 78 einnimmt, ebenfalls von ABCR). Nach 5 h bei 50 °C wird eine Polymerverbindung erhalten. Mn beträgt 19300. Der resultierende Feststoff enthält einen Ti-Gehalt von 0.2 Gew-%.

### Beispiel 4 :

10 g eines Methylhydrosiloxandimethylsiloxan-Copolymers HMS-151 (von ABCR), einer Verbindung gemäß Formel **IX**, wobei der Index m den Wert 3,8 und der Index n den Wert 21,4 einnimmt, werden mit 32.5 g (C₆H₁₁)₆(CH₂CH)Si₇O₉Ti(C₅H₅), gelöst in ein wenig Toluol, versetzt. Anschließend erfolgt die Zugabe von wenigen Tropfen einer Platindivinyltetramethyldisiloxan-Komplexlösung (200 ppm Platindivinyltetramethyldisiloxan in Xylol). Das Reaktionsgemisch wird für 10 Minuten bei Raumtemperatur gerührt. Nach 5 h bei 50 °C wird eine Polymerverbindung erhalten. Mn beträgt 7 400. Der resultierende Feststoff weist einen Ti-Gehalt von 3.4 Gew-% auf.

### Beispiel 5: Katalytische Oxidation von 1-Octen, Vergleichsbeispiel

0.16 mol 1-Octen und 0.16 mol H₂O₂ (35 % in H₂O) werden in Gegenwart von 0.5 g TS-1-Katalysator gemischt. Nach einer Reaktionszeit von 24 h wird bei einer Temperatur von 50 °C 1,2-Epoxyoctan mit einer Ausbeute von 91 % erhalten (bestimmt per GC).

### Beispiel 6 : Katalytische Oxidation von 1-Octen, erfindungsgemäß

0.16 mol 1-Octen und 0.16 mol H₂O₂ (35 % in H₂O) werden in Gegenwart von 0.5 g des nach Beispiel 1a hergestellten Ti-Katalysators gemischt. Nach einer Reaktionszeit von 24 h wird bei einer Temperatur von 50 °C 1,2-Epoxyoctan mit einer Ausbeute von 91 % erhalten (bestimmt per GC).

### Beispiel 7: Katalytische Oxidation von Cycloocten, Vergleichsbeispiel

0.16 mol Cycloocten und 0.736 mol H₂O₂ (35 % in H₂O) werden in Gegenwart von 0.5 g TS-1-Katalysator gemischt. Nach einer Reaktionszeit von 24 h wird bei einer Temperatur von 50 °C eine Ausbeute von 7 % an 1,2-Epoxycyclooctan erhalten (bestimmt per GC).

### Beispiel 8 : Katalytische Oxidation von Cycloocten, erfindungsgemäß

0.16 mol Cycloocten und 0.736 mol H₂O₂ (35 % in H₂O) werden in Gegenwart von 0.5 g des nach Beispiel 1a hergestellten Ti-Katalysators gemischt. Nach einer Reaktionszeit von 24 h wird bei einer Temperatur von 50 °C eine Ausbeute von 79 % an 1,2-Epoxycyclooctan erhalten (bestimmt per GC).

Die Versuchsergebnisse aus den Beispielen 5 bis 8 zeigen deutlich, dass bei der Verwendung eines herkömmlichen Katalysators und eines erfindungsgemäßen Katalysators zur Katalyse in einem Verfahren zur Oxidation des linearen 1-Octens (Beispiele 5 und 6) kein Unterschied in der Ausbeute des Oxidationsproduktes 1,2-Epoxyoctans beobachtet werden kann. Werden die beiden Katalysatoren allerdings in einem Verfahren zur Oxidation eines sterisch anspruchsvollen Alkens, wie z.B. Cycloocten (Beispiel 7 und 8) eingesetzt, so läßt sich erkennen, dass die Ausbeute bei dem Einsatz des erfindungsgemäßen Katalysators (Beispiel 8: Ausbeute 79 %) deutlich größer ist als bei der Verwendung des bekannten TS-1 Katalysators (Beispiel 7: Ausbeute 7 %).

### Beispiel 9 : Darstellung von (Cyclohexyl)₆(Vinyl)Si₇O₁₂TiOPrⁱ

Zu 2,75 g (3 mmol) (Cyclohexyl)₆(Vinyl)Si₇O₉(OH)₃ in 25 ml Hexan wurden 0,91 ml (3 mmol) Ti(OPrⁱ)₄ gegeben. Diese Mischung wurde bei einer Temperatur von 50 °C für 1,5 Stunden gerührt. Nach Beendigung des Rührens wurde das Lösemittel verdampft. Es wurde 3,03 g eines weißen Pulvers erhalten, welches durch ein ¹H-NMR (CDCl₃) und ein ²⁹Si-NMR (CDCl₃) als die Verbindung (Cyclohexyl)₆(Vinyl)Si₇O₁₂TiOPrⁱ identifiziert wurde.

### Beispiel 10 : Darstellung von (Cyclohexyl)₆(Vinyl)Si₇O₁₂TiCp

Zu 2,75 g (3 mmol) (Cyclohexyl)₆(Vinyl)Si₇O₉(OH)₃ in 35 ml Toluol wurden 0,658 g (3 mmol) CpTiCl₃ und anschließend 1,5 ml Pyridin gegeben. Diese Mischung wurde bei Raumtemperatur für eine Stunden gerührt. Nach Beendigung des Rührens wurde die Lösung filtriert und das Filtrat wurde konzentriert bis auf 10 ml Volumen. Nach der Zugabe von 10 ml Acetonitril konnten weiße Kristalle isoliert werden. Die weißen Kristalle wurden durch ¹H-NMR (CDCl₃) und ²⁹Si-NMR (CDCl₃) als (Cyclohexyl)₆(Vinyl)Si₇O₁₂TiCp identifiziert. Die Ausbeute betrug 78 %

### Beispiel 11 : Darstellung eines Katalysatorsystems

Zu 3 g des Methylhydrosiloxandimethylsiloxan-Copolymers HMS-301 (von ABCR), einer Verbindung gemäß Formel **IX**, wobei der Index m den Wert 6,4 und der Index n den Wert 19,3 einnimmt, gelöst in 5 ml Hexan, werden 720 mg (Cyclohexyl)₆(Vinyl)Si₇O₁₂TiOPrⁱ, gelöst in 3 ml Hexan, und zwei Tropfen einer Platindivinyltetramethyldisiloxan-Komplexlösung (200 ppm Platindivinyltetramethyldisiloxan in Xylol, Firma Gelest) gegeben. Das Reaktionsgemisch wird für 30 Minuten bei Raumtemperatur gerührt. Anschließend wurden 2,4 g Vinyl-terminiertes Polydimethylsiloxan (DMS-V05, Firma Gelest), verdünnt in 3 ml Hexan, wobei diese Mischung zwei Tropfen einer Platindivinyltetramethyldisiloxan-Komplexlösung (200 ppm Platindivinyltetramethyldisiloxan in Xylol, Firma Gelest) aufwies, dem Reaktionsgemisch hinzugefügt. Das Reaktionsgemisch wurde für 30 Minuten gerührt, dann auf eine Glasplatte gegeben und über Nacht bei einer Temperatur von 80 °C verfestigt. Das erhaltene brüchige Polymerverbindung wurde gemörsert, mit 10 ml feuchtem Diethylether versetzt und für zwei Stunden gerührt, um das Ti-OPrⁱ zu TiOH zu hydrolisieren. Anschließend wird das Gemisch für zwei Tage kontinuierlich mit Diethylether extrahiert, um lösliche Verunreinigungen zu entfernen. Nach dem Abfiltrieren des Diethylethers und.Trocknen des Filterrückstandes wurden 4,8 g einer erfindungsgemäßen, einen Silasesquioxan-Metallkomplex aufweisenden Polymerverbindung (Polymer 11) erhalten.

### Beispiel 12 : Darstellung eines Katalysatorsystems

Zu 2 g eines Methylhydrosiloxandimethylsiloxan-Copolymers HMS-151 (von ABCR), einer Verbindung gemäß Formel **IX**, wobei der Index m den Wert 3,8 und der Index n den Wert 21,4 einnimmt, gelöst in 5 ml Hexan werden 410 mg (Cyclohexyl)₆(Vinyl)Si₇O₁₂TiOPrⁱ, gelöst in 3 ml Hexan und zwei Tropfen einer Platindivinyltetramethyldisiloxan-Komplexlösung (200 ppm Platindivinyltetramethyldisiloxan in Xylol, Firma Gelest) gegeben. Das Reaktionsgemisch wird für 30 Minuten bei Raumtemperatur gerührt. Anschließend wurden 1,06 g Vinyl-terminiertes Polydimethylsiloxan (DMS-V05, Firma Gelest), verdünnt in 3 ml Hexan, wobei diese Mischung zwei Tropfen einer Platindivinyltetramethyldisiloxan-Komplexlösung (200 ppm Platindivinyltetramethyldisiloxan in Xylol, Firma Gelest) aufwies, dem Reaktionsgemisch hinzugefügt. Das Reaktionsgemisch wurde für 30 Minuten gerührt, dann auf eine Glasplatte gegeben und über Nacht bei einer Temperatur von 80 °C verfestigt. Das erhaltene brüchige Polymerverbindung wurde gemörsert, mit 10 ml feuchtem Diethylether versetzt und für zwei Stunden gerührt, um das Ti-OPrⁱ zu TiOH zu hydrolisieren. Anschließend wird das Gemisch für zwei Tage kontinuierlich mit Diethylether extrahiert, um lösliche Verunreinigungen zu entfernen. Nach dem Abfiltrieren des Diethylethers und Trocknen des Filterrückstandes wurden 4,8 g einer erfindungsgemäßen, einen Silasesquioxan-Metallkomplex aufweisenden Polymerverbindung erhalten (Polymer 12).

### Beispiel 13 : Darstellung eines Katalysatorsystems

Zu 0,43 g eines Methylhydrosiloxandimethylsiloxan-Copolymers HMS-151 (von ABCR), einer Verbindung gemäß Formel **IX**, wobei der Index m den Wert 3,8 und der Index n den Wert 21,4 einnimmt, gelöst in 5 ml Hexan, werden 250 mg (Cyclohexyl)₆(Vinyl)Si₇O₁₂TiOPrⁱ gelöst in 3 ml Hexan, und zwei Tropfen einer Platindivinyltetramethyldisiloxan-Komplexlösung (200 ppm Platindivinyltetramethyldisiloxan in Xylol, Firma Gelest) gegeben. Das Reaktionsgemisch wird für 30 Minuten bei Raumtemperatur gerührt. Anschließend wurden 1,44 g Vinyl-terminiertes Polydimethylsiloxan (DMS-V21, Firma Gelest) verdünnt in 3 ml Hexan, wobei diese Mischung zwei Tropfen einer Platindivinyltetramethyldisiloxan-Komplexlösung (200 ppm Platindivinyltetramethyldisiloxan in Xylol, Firma Gelest) aufwies, dem Reaktionsgemisch hinzugefügt. Das Reaktionsgemisch wurde für 30 Minuten gerührt, dann auf eine Glasplatte gegeben und über Nacht bei einer Temperatur von 80 °C verfestigt. Das erhaltene brüchige Polymerverbindung wurde gemörsert, mit 10 ml feuchtem Diethylether versetzt und für zwei Stunden gerührt, um das Ti-OPrⁱ zu TiOH zu hydrolisieren. Anschließend wird das Gemisch für zwei Tage kontinuierlich mit Diethylether extrahiert, um lösliche Verunreinigungen zu entfernen. Nach dem Abfiltrieren des Diethylethers und Trocknen des Filterrückstandes wurden 1,4 g einer erfindungsgemäßen, einen Silasesquioxan-Metallkomplex aufweisenden Polymerverbindung erhalten (Polymer 13).

### Beispiel 14 : Darstellung eines Katalysatorsystems

Zu 3 g des Methylhydrosiloxandimethylsiloxan-Copolymers HMS-301 (von ABCR), einer Verbindung gemäß Formel **IX**, wobei der Index m den Wert 6,4 und der Index n den Wert 19,3 einnimmt, gelöst in 5 ml Toluol, werden 727 mg (Cyclohexyl)₆(Vinyl)Si₇O₁₂TiCp gelöst in 3 ml Toluol und zwei Tropfen einer Platindivinyltetramethyldisiloxan-Komplexlösung (200 ppm Platindivinyltetramethyldisiloxan in Xylol, Firma Gelest) gegeben. Das Reaktionsgemisch wird für 30 Minuten bei Raumtemperatur gerührt. Anschließend wurden 2,4 g Vinyl-terminiertes Polydimethylsiloxan (DMS-V05, Firma Gelest), verdünnt in 3 ml Toluol, wobei diese Mischung zwei Tropfen einer Platindivinyltetramethyldisiloxan-Komplexlösung (200 ppm Platindivinyltetramethyldisiloxan in Xylol, Firma Gelest) aufwies, dem Reaktionsgemisch hinzugefügt. Das Reaktionsgemisch wurde für 30 Minuten gerührt, dann auf eine Glasplatte gegeben und über Nacht bei einer Temperatur von 80 °C verfestigt. Das erhaltene brüchige Polymerverbindung wurde gemörsert, mit 10 ml feuchtem Diethylether versetzt und für zwei Stunden gerührt. Anschließend wird das Gemisch für zwei Tage kontinuierlich mit Diethylether extrahiert, um lösliche Verunreinigungen zu entfernen. Nach dem Abfiltrieren des Diethylethers und Trocknen des Filterrückstandes wurden 5,1 g einer erfindungsgemäßen, einen Silasesquioxan-Metallkomplex aufweisenden Polymerverbindung (Polymer 14) erhalten.

### Beispiel 15 : Darstellung eines Katalysatorträgers

Zu 3 g des Methylhydrosiloxandimethylsiloxan-Copolymers HMS-301 (von ABCR), einer Verbindung gemäß Formel **IX**, wobei der Index m den Wert 6,4 und der Index n den Wert 19,3 einnimmt, gelöst in 4 ml Hexan werden 647 mg (Cyclohexyl)₆(Vinyl)Si₇O₉(OH)₃ gelöst in 4 ml Toluol und zwei Tropfen einer Platindivinyltetramethyldisiloxan-Komplexlösung (200 ppm Platindivinyltetramethyldisiloxan in Xylol, Firma Gelest) gegeben. Das Reaktionsgemisch wird für 30 Minuten bei Raumtemperatur gerührt. Anschließend wurden 2,4 g Vinyl-terminiertes Polydimethylsiloxan (DMS-V05, Firma Gelest) verdünnt in 3 ml Hexan, wobei diese Mischung zwei Tropfen einer Platindivinyltetramethyldisiloxan-Komplexlösung (200 ppm Platindivinyltetramethyldisiloxan in Xylol, Firma Gelest) aufwies, dem Reaktionsgemisch hinzugefügt. Das Reaktionsgemisch wurde für 15 Minuten gerührt, dann auf eine Glasplatte gegeben und über Nacht bei einer Temperatur von 80 °C verfestigt. Es wurden 5,2 g eines Katalysatorträgers (Polymer 15) erhalten.

### Beispiel 16: Darstellung eines Katalysatorsystems unter Verwendung des Katalysatorträgers aus Beispiel 15

Zu einer Suspension aus 4,75 g des Katalysatorträgers (Polymer 15) aus Beispiel 15 in 40 ml trockenem Toluol wurden 0,2 ml Ti(OPrⁱ)₄ gegeben. Diese Suspension wurde für 4 Stunden bei einer Temperatur von 50 °C und anschließend über Nacht bei Raumtemperatur gerührt. Es wurde noch einmal die gleiche Menge Ti(OPrⁱ)₄ der Suspension hinzugefügt und weitere 24 Stunden gerührt. Das erhaltene Polymer wurde abfiltriert, mit zwei mal 50 ml trockenem Diethylether gewaschen und über 2 Tage kontinuierlich mit trockenem Diethylether extrahiert. Es wurde eine erfindungsgemäße Polymerverbindung (Polymer 16) erhalten.

### Beispiel 17 : Katalytische Epoxidierung

Es wurden Epoxidierungen unter Verwendung der Katalysatorsysteme Polymer 11, 12, 13, 14, 15 und 16 aus den entsprechenden Beispielen durchgeführt. Die Epoxidierungen wurde in 2 ml Batchreaktoren, die mit ungefähr 60 mg des jeweiligen Katalysatorsystems gefüllt waren, bei einer Temperatur von 50 °C durchgeführt. Für die Epoxidierung mit tert.-Butylhydroperoxid (TBHP) wurde eine Lösung von 1,8 mmol TBHP und 1,8 mmol Cycloocten in 1 ml iso-Octan eingesetzt. Für die Epoxidierung von Cycloocten mit wäßrigem Wasserstoffperoxid wurde ein Gemisch von 200 mg einer 35 %-igen wäßrigen Lösung von Wasserstoffperoxid und 960 mg Cyclooctan eingesetzt.

Die am Ausgang des Reaktors erhaltenen Reaktionsgemische wurden gaschromatographisch analysiert. Verwendet wurde der Gaschromatograph (GC) "Carlo Erba GC6000 Vega Series", ausgerüstet mit einer Kapillarkolonne DB-1 und einem FID. Zu diesem Zweck enthielten alle Proben 1,3,5-Trimethylbenzol (> 98 %, Merck) als internen GC Standard.

In der nachfolgenden Tabelle sind die Ergebnisse der Epoxidierungsversuche mit den verschiedenen Katalysatorsystemen aufgelistet. Die Ausbeute an Epoxid bezieht sich auf die Menge an eingesetztem Cycloocten.

| Katalysatorsystem | Ausbeute an Epoxid in % nach einer Reaktionszeit von 24 h | |
|---|---|---|
| | Tert.-Butylhydroperoxid | Wasserstoffperoxid |
| Polymer 11 | 55 | 90 |
| Polymer 12 | 70 | 61 |
| Polymer 13 | - | 59 |
| Polymer 14 | 69 | 65 |
| Polymer 15 | - | < 1 |
| Polymer 16 | 74 | 76 |

Anhand der Tabelle wird deutlich erkennbar, dass das Polymer 15, welches keinen Silasesquioxan-Metallkomplex aufweist, keine katalytische Aktivität in Bezug auf die Epoxidierung von Cycloocten aufweist. Je nach verwendetem Polymer und je nach eingesetztem Oxidationsmittel, werden unterschiedlich hohe Ausbeuten erhalten. Die höchste Ausbeute bei der Verwendung von TBHP wird mit Einsatz des Polymers 16 erhalten. Bei der Verwendung von Wasserstoffperoxid als Oxidationsmittel, wird bei Einsatz des Katalysatorsystems Polymer 11 die höchste Ausbeute (90 %) erzielt.

## Patentansprüche

1. Katalysatorsystem auf Basis einer zumindest einen Silasesquioxan-Metallkomplex aufweisenden Polymerverbindung,
**dadurch gekennzeichnet,**
**dass** die Polymerverbindung ein Molekulargewicht Mn größer 1 000 g/mol aufweist.

2. Katalysatorsystem nach Anspruch 1,
**dadurch gekennzeichnet,**
**dass** der Silasesquioxan-Metallkomplex zumindest ein Metall der Nebengruppen des Periodensystems, der Lanthanoide, der Actinoide, der 3. Hauptgruppe und/oder der 4. Hauptgruppe aufweist.

3. Katalysatorsystem nach Anspruch 2,
**dadurch gekennzeichnet,**
**dass** der Silasesquioxan-Metallkomplex zumindest ein Metall der 4. Nebengruppe des Periodensystems aufweist.

4. Katalysatorsystem nach Anspruch 3,
**dadurch gekennzeichnet,**
**dass** der Silasesquioxan-Metallkomplex zumindest Titan aufweist.

5. Katalysatorsystem nach zumindest einem der Ansprüche 1 bis 4,
**dadurch gekennzeichnet,**
**dass** die zumindest einen Silasesquioxan-Metallkomplex aufweisende Polymerverbindung von 1 x 10⁻⁸ Gew.-% bis 25 Gew.-% zumindest eines Metalls aufweist.

6. Katalysatorsystem nach Anspruch 5,
**dadurch gekennzeichnet,**
**dass** die zumindest einen Silasesquioxan-Metallkomplex aufweisende Polymerverbindung von 1 x 10⁻⁶ Gew.-% bis 10 Gew.-% zumindest eines Metalls aufweist.

7. Katalysatorsystem nach zumindest einem der Ansprüche 1 bis 6,
**dadurch gekennzeichnet,**
**dass** die Polymerverbindung zumindest einen Silasesquioxan-Metallkomplex der Formel **I**
R¹ ₐR² _{b}R³ ⱼSi_{c}O_{d}HₑX_{f}M_{g}Yₕ I
mit
R¹ = aliphatischer, aromatischer, cyclischer oder acyclischer Kohlenwasserstoffrest, mit oder ohne funktionelle Gruppen,
R² = zumindest eine Doppelbindung aufweisender aliphatischer, aromatischer, cyclischer oder acyclischer Kohlenwasserstoffrest,
R³ = aliphatischer, aromatischer, cyclischer oder acyclischer Kohlenwasserstoffrest, über welchen der Silasesquioxan-Metallkomplex mit einem Rest der Polymerverbindung verbunden ist,
X = H, OH, Halogen, Alkoxyrest und/oder Organosilylrest
M= Element der Nebengruppen des Periodensystems, Lanthanoid, Actinoid, Element der 3. Hauptgruppe und/oder Element der 4. Hauptgruppe
Y = anionischer Rest,
a= 0 bis 23,
b= 0 bis 23,
c = 5 bis 24,
d= 12 bis 48,
e = 0 bis 10,
f = 0 bis 8,
g = 0 bis 4,
h= 0 bis 12,
j = 1 bis 24
mit der Maßgabe, dass a + b + j = c,
aufweist.

8. Katalysatorsystem nach Anspruch 7,
**dadurch gekennzeichnet,**
**dass** die Polymerverbindung von 0,1 Gew.-% bis 99 Gew.-% zumindest eines Silasesquioxan-Metallkomplexes der Formel **I** aufweist.

9. Katalysatorsystem nach Anspruch 8,
**dadurch gekennzeichnet,**
**dass** die Polymerverbindung von 1 Gew.-% bis 90 Gew.-% zumindest eines Silasesquioxan-Metallkomplexes der Formel **I** aufweist.

10. Katalysatorsystem nach zumindest einem der Ansprüche 1 bis 9,
**dadurch gekennzeichnet,**
**dass** die Polymerverbindung Polysiloxanketten aufweist.

11. Verfahren zur Herstellung von Katalysatorsystemen auf Basis einer zumindest einen Silasesquioxan-Metallkomplex aufweisenden Polymerverbindung,
**dadurch gekennzeichnet,**
**dass** die Polymerverbindung durch Homo- Co-, und/oder Pfropfpolymerisation (Grafting) einer Silasesquioxan-Verbindung, die zumindest einen ungesättigten Olefinrest aufweist, erhalten wird.

12. Verfahren nach Anspruch 11,
**dadurch gekennzeichnet,**
**dass** als Silasesquioxan-Verbindung zumindest eine Verbindung der Formel **II**
R¹ ₐR² _{b}Si_{c}O_{d}HₑX_{f}M_{g}Yₕ II
mit
R¹ = aliphatischer, aromatischer, cyclischer oder acyclischer Kohlenwasserstoffrest, mit oder ohne funktionelle Gruppen,
R² = zumindest eine Doppelbindung aufweisender aliphatischer, aromatischer, cyclischer oder acyclischer Kohlenwasserstoffrest,
X = H, OH, Halogen, Alkoxyrest und/oder Organosilylrest
M= Element der Nebengruppen des Periodensystems, Lanthanoid, Actinoid, Element der 3. Hauptgruppe und/oder Element der 4. Hauptgruppe
Y = anionischer Rest,
a= 0 bis 23,
b= 1 bis 24,
c = 5 bis 24,
d= 12 bis 48,
e= 0 bis 10,
f = 0 bis 8,
g = 0 bis 4,
h = 0 bis 12,
und mit der Maßgabe, dass a + b = c,
eingesetzt wird.

13. Verfahren nach Anspruch 11,
**dadurch gekennzeichnet,**
**dass** als Silasesquioxan-Verbindung zumindest eine Verbindung der Formel **III**
R¹ ₐR² _{b}Si₇O₁₂M_{g}Yₕ III
mit
R¹ = aliphatischer, aromatischer, cyclischer oder acyclischer Kohlenwasserstoffrest, mit oder ohne funktionelle Gruppen,
R² = zumindest eine Doppelbindung aufweisender aliphatischer, aromatischer, cyclischer oder acyclischer Kohlenwasserstoffrest,
M= Element der Nebengruppen des Periodensystems, Lanthanoid, Actinoid, Element der 3. Hauptgruppe und/oder Element der 4. Hauptgruppe
Y = anionischer Rest,
a= 0 bis 6,
b= 1 bis 7,
g = 1,
h= 1 bis 3,
und mit der Maßgabe, dass a + b = 7,
eingesetzt wird.

14. Verfahren nach Anspruch 11,
**dadurch gekennzeichnet,**
**dass** als Silasesquioxan-Verbindung zumindest eine Verbindung der Formel **IV**
R¹ ₐR² _{b}Si₇O₁₂H₃ IV
mit
R¹ = aliphatischer, aromatischer, cyclischer oder acyclischer Kohlenwasserstoffrest, mit oder ohne funktionelle Gruppen,
R² = zumindest eine Doppelbindung aufweisender aliphatischer, aromatischer, cyclischer oder acyclischer Kohlenwasserstoffrest,
a= 0 bis 6,
b= 1 bis 7,
und mit der Maßgabe, dass a + b = 7,
eingesetzt wird.

15. Verfahren nach Anspruch 11,
**dadurch gekennzeichnet,**
**dass** als Silasesquioxan-Verbindung zumindest eine Verbindung der Formel **V**
R¹ ₐR² _{b}Si₁₈O₃₇Ti₄ V
mit
R¹ = aliphatischer, aromatischer, cyclischer oder acyclischer Kohlenwasserstoffrest, mit oder ohne funktionelle Gruppen,
R² = zumindest eine Doppelbindung aufweisender aliphatischer, aromatischer, cyclischer oder acyclischer Kohlenwasserstoffrest,
a= 0 bis 17,
b= 1 bis 18,
und mit der Maßgabe, dass a + b = 18,
eingesetzt wird.

16. Verfahren nach Anspruch 11,
**dadurch gekennzeichnet,**
**dass** als Silasesquioxan-Verbindung zumindest eine Verbindung der Formel **VI**
R¹ ₐR² _{b}Si₇O₁₂TiY VI
mit
R¹ = aliphatischer, aromatischer, cyclischer oder acyclischer Kohlenwasserstoffrest, mit oder ohne funktionelle Gruppen,
R² = zumindest eine Doppelbindung aufweisender aliphatischer, aromatischer, cyclischer oder acyclischer Kohlenwasserstoffrest,
Y = anionischer Rest,
a = 0 bis 6,
b= 1 bis 7,
und mit der Maßgabe, dass a + b = 7,
eingesetzt wird.

17. Verfahren nach zumindest einem der Ansprüche 11 bis 16,
**dadurch gekennzeichnet,**
**dass** eine Co- und/oder Pfropfpolymerisation zumindest einer Silasesquioxan-Verbindung mit zumindest einer Verbindung, die zumindest eine olefinisch ungesättigte Bindung und/oder zumindest eine H-Heteroatom-Gruppe aufweist, durchgeführt wird.

18. Verfahren nach Anspruch 17,
**dadurch gekennzeichnet,**
**dass** als zumindest eine Verbindung, die eine olefinisch ungesättigte Verbindung aufweist, ein Siloxan oder eine Silasesquioxan-Verbindung eingesetzt wird.

19. Verfahren nach Anspruch 18,
**dadurch gekennzeichnet**,
das als Siloxan ein endständiges Vinyl-Gruppen aufweisendes Polydialkylsiloxan eingesetzt wird.

20. Verfahren nach Anspruch 19,
**dadurch gekennzeichnet**,
das als Siloxan ein endständiges Vinyl-Gruppen aufweisendes Polydimethylsiloxan eingesetzt wird.

21. Verfahren nach Anspruch 17,
**dadurch gekennzeichnet**,
das als Siloxan ein Alkylhydrosiloxan-Dialkylsiloxan-Copolymer eingesetzt wird.

22. Verfahren nach Anspruch 21,
**dadurch gekennzeichnet**,
das als Siloxan ein Methylhydrosiloxan-Dimethylsiloxan-Copolymer eingesetzt wird.

23. Verfahren nach zumindest einem der Ansprüche 11 bis 22,
**dadurch gekennzeichnet,**
**dass** die Herstellung in Masse durchgeführt wird.

24. Verfahren nach zumindest einem der Ansprüche 11 bis 22,
**dadurch gekennzeichnet,**
**dass** die Herstellung in flüssiger Phase durchgeführt wird.

25. Verfahren nach zumindest einem der Ansprüche 11 bis 22,
**dadurch gekennzeichnet,**
**dass** die Herstellung in einem aprotischen Lösungsmittel durchgeführt wird.

26. Verfahren nach Anspruch 25,
**dadurch gekennzeichnet,**
**dass** als aprotisches Lösungsmittel Toluol verwendet wird.

27. Verfahren zur Oxidation oder Oximierung von organischen Verbindungen,
**dadurch gekennzeichnet,**
**dass** ein Katalysatorsystem gemäß zumindest einem der Ansprüche 1 bis 9 eingesetzt wird.

28. Verfahren gemäß Anspruch 27,
**dadurch gekennzeichnet,**
**dass** das Katalysatorsystem als heterogener Katalysator eingesetzt wird.

29. Verfahren gemäß Anspruch 27,
**dadurch gekennzeichnet,**
**dass** das Katalysatorsystem als homogener Katalysator eingesetzt wird.

30. Verfahren gemäß Anspruch 29,
**dadurch gekennzeichnet,**
**dass** das als homogener Katalysator eingesetzte Katalysatorsystem aus der Reaktionslösung mittels zumindest einer Membrane entfernt wird.

31. Verfahren gemäß zumindest einem der Ansprüche 27 bis 30,
**dadurch gekennzeichnet,**
**dass** als Oxidationsmittel zumindest Wasserstoffperoxid eingesetzt wird.

32. Verfahren gemäß zumindest einem der Ansprüche 27 bis 30,
**dadurch gekennzeichnet,**
**dass** als Oxidationsmittel zumindest ein organisches Peroxid eingesetzt wird.

33. Verfahren gemäß Anspruch 32,
**dadurch gekennzeichnet,**
**dass** als organisches Peroxid tert.-Butylhydroperoxid, Ethylbenzolhydroperoxid und/oder Cumolhydroperoxid eingesetzt wird.

34. Verfahren gemäß zumindest einem der Ansprüche 27 bis 33,
**dadurch gekennzeichnet,**
**dass** als zu oxidierende oder oximierende Verbindung zumindest eine cyclische oder acyclische, einfach oder mehrfach ungesättigte Verbindung, ausgewählt aus Alkanen, Alkenen, Alkinen, Arenen, Heteroarenen, Alkoholen, Aldehyden, Ketonen, Sulfiden, Sulfoxiden, Aminen, Iminen, Hydroxylaminen, Säuren, Amiden, Estern, Anhydriden oder Säurehalogeniden eingesetzt wird.
